# EUROPEAN PATENT APPLICATION

(11) **EP 4 339 171 A1**
(43) Date of publication of application: **20.03.2024**
(21) Application number: 22195372.2
(22) Date of filing: 13.09.2022
(51) Int. Cl.: C03C 23/00, A61J 1/14

(54) **TREATMENT OF A GLASS CONTAINER**

(71) Applicant: SCHOTT AG, 55122 Mainz (DE)
(72) Inventor: Woywood, Tanja, 55126 Mainz (DE); Gheczy, Inga, 65719 Hofheim am Taunus (DE); Bauch, Hartmut, 55278 Mommenheim (DE)
(74) Representative: Schott Corporate IP

(57) **Abstract**

Method for the treatment of a glass container to obtain a leach resistant inner surface by using a washing treatment of at least part of an inner surface of the glass container followed by a plasma treatment of at least part of the inner surface of the glass container.

## Description

The invention relates to a method of treating a surface of a glass container or element to have an enhanced leaching resistance in a broad range pH range.

Liquid pharmaceutical compositions have been packaged in glass containers, e.g. vials, ampoules, cartridges or syringes.

For some liquid pharmaceutical compositions comprising very sensitive drugs, e.g. biologics, it is beneficial to be stored in an alkaline buffer solution. Conversely, other liquid pharmaceutical compositions comprise acidic buffer solutions. In general, pharmaceutical compositions come in a range of pH values, many of them not neutral. These non-pH neutral liquids tend to leach the surface of the glass container, potentially resulting in unwanted substances from the glass, in particular Si, surface leaching into the pharmaceutical liquid. The invention is concerned with improving the resistance of the glass surface with respect to leaching and in general improving the chemical stability of the container surface, in a manner that is:
- fast to manufacture; and/or
- reliable in application; and/or
- cheap to produce; and/or
- easy to perform.

In addition, the invention relates to a method to develop a treated container having improved properties, i.e. a treated container having:
- excellent resistance in a wide pH range; and/or
- improved resistance at high pH values; and/or
- high chemical stability; and/or
- excellent adhesion properties.

The above-described objects are solved by a method for a quality evaluation of a treated container, comprising the following steps:
providing a glass container;
washing at least part of the inner surface of the container to obtain a clean surface able to receive a subsequent surface treatment,
performing a surface treatment on at least part of the inner surface of the container to obtain a leach resistant treated surface.

Furthermore, the above-described objects are solved by a treated container, wherein the leaching of one or more type(s) of ions and/or compounds, in particular Si, is obtainable by the method described herein, and wherein the leaching of one or more type(s) of ions and/or compounds, in particular Si is 6.00 mg/l or less. Furthermore, it was surprisingly found that if a treatment process according to the invention is performed before a subsequent coating process on the treated glass surface, the adhesion of the coating layer(s) can be improved.

Thus, preferably the method comprises the steps:
- performing a treating process on the at least part of the glass surface of the glass element,
wherein the treating process is one or more, preferably at least a plasma treatment, preferably first a washing treatment and then a plasma treatment, of the following:
i) a washing treatment; and/or
ii) a plasma treatment.

Without wishing to be bound to theory, it was surprisingly recognized that, by performing the specific treatment described herein, the glass surface has an improved resistance to leaching. Thus, especially the combination of the treatment, preferably the specific plasma treatment described herein may result in a layer having especially improved properties, i.e. excellent resistance in a wide pH range, improved resistance at high pH values, high chemical stability.

In a preferred embodiment, the washing treatment is spraying water to the at least part of the glass surface, wherein one or more, preferably all, of the following parameters are fulfilled:
i) the time of spraying is 1 s to 5 h, preferably 5 s to 60 min, more preferably 1 min to 40 min, more preferably 10 min to 40 min; and/or
ii) the water conductivity is 0.1 µs/cm to 400 µs/cm, preferably 0.5 µs/cm to 10 µs/cm, more preferably 1 µs/cm to 5 µs/cm, more preferably about 2 µs/cm; and/or
iii) the temperature of the water is 10 °C or more, preferably 15 °C to 100 °C, more preferably 20 °C to 80 °C, more preferably 25 °C to 40 °C.

More preferably, all parameters i) to iii) are fulfilled. In another preferred embodiment, the spraying time is 10 min or more, and/or the water conductivity is 2 µs/cm or less and/or, preferably and, the water temperature is at least partially 30 °C or more. Preferably, the water is sprayed by a needle nozzle, preferably having an inner diameter of 0.05 mm to 5 mm, preferably 0.5 mm to 2 mm, to the at least part of the glass surface. The washing treatment is very easy to implement in production. Preferably, after the washing treatment, the glass surface is dried, preferably for 1 to 100 minutes at 100 to 400 °C, preferably for 35 minutes to 40 minutes at 200 to 300 °C. Preferably, the washing treatment is performed before the plasma treatment.

In another preferred embodiment, the plasma treatment is a plasma-enhanced chemical vapor treatment (PECVT) process, plasma impulse chemical vapor treatment (PICVT) process or plasma assisted chemical vapor treatment (PACVT) process, comprising the steps:
a) surrounding the at least part of the glass surface of the glass element with a precursor P2, and
b) irradiating the precursor P2 to generate a plasma;
wherein at least one, preferably all, of the following parameters is/are fulfilled:
i) wherein the process temperature PT2 is room temperature to Tg of the glass of the glass element, preferably room temperature to 450 °C, more preferably room temperature to 400 °C, more preferably room temperature to 320 °C, more preferably room temperature to 280 °C; and/or
ii) wherein the pulse duration PD2 of the plasma is 50 ms or less, preferably 40 ms or less, preferably 30 ms or less, more preferably 20 ms or less, more preferably 15 ms or less, more preferably 8 ms or less, more preferably 6 ms or less, more preferably 1 ms or less, more preferably 0.5 ms; and/or
iii) wherein the pulse duration PD2 of the plasma is 0.1 ms or more, preferably 0.2 ms or more, more preferably 0.3 ms or more, more preferably 0.5 ms or more; and/or
iv) wherein the irradiation is carried out by a microwave generator, preferably wherein the ray has a frequency of 300 MHz to 300 GHz, more preferably 600 MHz to 100 GHz, more preferably 800 MHz to 10 GHz, more preferably 900 MHz to 3 GHz, more preferably about 2.45 GHz; and/or
v) wherein the input power IP2, preferably the input power IP2 of the microwave generator, is 1000 W to 10000 W, preferably 2500 W to 8000 W, more preferably 4000 W to 8000 W, more preferably 5000 W to 7000 W, more preferably 5000 W to 6500 W, more preferably 5250 W to 5750 W; and/or
vi) the precursor P2 comprises argon, oxygen and/or nitrogen, preferably oxygen, more preferably precursor P2 is air; and/or
vii) wherein the precursor P2 comprises, preferably consists of, the elements N, e.g.N₂, and/or O, e.g. O₂; preferably N₂ and O₂, more preferably O₂; and/or
viii) the pulse pause PP2 between two pulses is 1 µs or more, preferably 10 µs or more, more preferably 1 µs to 5 s, more preferably 0.1 ms to 10 ms, more preferably 0.5 ms to 2.0 ms, more preferably 1.5 ms to 2.0 ms, more preferably 1.8 ms; and/or
ix) the total time TT2 of irradiation is 0.1 s or more, preferably 1 s or more, more preferably 1 s to 5 min, more preferably 5 s to 15 s; and/or
x) the ratio [ms/ms] of all pulse durations PD2 [ms] to all pulse pauses PP2 [ms] is 0.05 or more, preferably 0.1 or more, more preferably 0.15 to 5, more preferably 0.2 to 0.5; and/or
xi) wherein the process pressure PR2 is 0.01 mbar to 500 mbar, preferably 0.1 mbar to 100 mbar, more preferably 0.5 mbar to 10 mbar, more preferably 0.8 mbar to 6.0 mbar, more preferably 1.0 mbar to 4.0 mbar; and/or
xii) wherein the process temperature PT2 is increasing, preferably steadily increasing, during the plasma treatment; and/or
xiii) wherein the process temperature PT2 is at least partially, preferably at the time when the plasma treatment process ends, 220 °C or more, preferably 240 °C or more, more preferably 250 °C or more, more preferably 255 °C or more, more preferably 270 °C or more, more preferably 280 °C or more; and/or
xiv) wherein the flow rate of the precursor P2 is 0.1 to 500 sccm, preferably 5 to 100 sccm, more preferably 8 to 50 sccm, more preferably 20 to 30 sccm.

According to the invention, is was surprisingly found that if a low pressure, i.e. 10 mbar or less, preferably 6.0 mbar or less, more preferably 4 mbar or less in combination with a low input power, i.e. 8000 W or less, preferably 7000 W or less, more preferably 6500 W or less, more preferably 5750 W or less, is used, the above described properties can be further improved. Furthermore, if one or more, preferably all, parameters are fulfilled, the activation of the surface can be further improved. Consequently, the properties, especially the adhesion of the layer, can be improved. It is further preferred that the precursor P2 is chemically pure with a degree of at least 99 wt.%, preferably at least 99.995%.

In one embodiment, surrounding the at least part of the glass surface of the glass element with a precursor P2 may be understood as exposing or subjecting the at least part of the glass surface of the glass element with a precursor P2.

In one embodiment, the total time TT2 of irradiation is the sum of all durations of the pulses and the pulse pauses.

In one embodiment, the process temperature PT2 is increasing, preferably steadily increasing, during the plasma treatment, with respect to the total time TT2 of irradiation, wherein the total time TT2 of irradiation is the sum of all durations of the pulses and the pulse pauses.

The glass of the glass element is not particularly limited. Preferably, the glass is a borosilicate glass, an aluminosilicate glass, a lithium-aluminosilicate (LAS) glass, more preferably a borosilicate glass. Thus, a strong adhesion of the at least one layer can be improved.

In a preferred embodiment, the composition of the glass comprises, in mass-%:

| | |
|---|---|
| SiO₂: | 30 to 98 %, preferably 50 to 90 %, more preferably 70.0 to 74.0 %; and/or |
| B₂O₃: | 0 to 30 %, preferably 3 to 20 %, more preferably 7.0 to 16.0 %; and/or |
| Al₂O₃: | 0 to 30 %, preferably 1 to 15 %, more preferably 3.0 to 6.5 %; and/or |
| X₂O: | 0 to 30 %, preferably 1 to 15 %, more preferably 2.0 to 7.2 %, wherein X is selected from Na, K, Li, preferably X is Na and/or K; and/or |
| YO: | 0 to 30 %, preferably 0.1 to 5 %, more preferably 0.5 to 1.0 %, wherein Y is selected from Ca, Mg, Ba, preferably Y is Ca and/or Mg. |

More preferably, the composition of the glass consists of, in mass-%:

| | |
|---|---|
| SiO₂: | 30 to 98 %, preferably 50 to 90 %, more preferably 70.0 to 74.0 %; |
| B₂O₃: | 0 to 30 %, preferably 3 to 20 %, more preferably 7.0 to 16.0 %; |
| Al₂O₃: | 0 to 30 %, preferably 1 to 15 %, more preferably 3.0 to 6.5 %; |
| X₂O: | 0 to 30 %, preferably 1 to 15 %, more preferably 2.0 to 7.2 %, wherein X is selected from Na, K, Li, preferably X is Na and/or K; |
| YO: | 0 to 30 %, preferably 0.1 to 5 %, more preferably 0.5 to 1.0 %, wherein Y is selected from Ca, Mg, Ba, preferably Y is Ca and/or Mg; and unavoidable impurities. |

In another preferred embodiment, the composition of the glass comprises, in mass-%:

| | |
|---|---|
| SiO₂: | 20 to 98 %, preferably 40 to 75 %, more preferably 50 to 65 %; and/or |
| B₂O₃: | 0 to 30 %, preferably 1 to 15 %, more preferably 3 to 9 %; and/or |
| Al₂O₃: | 0 to 30 %, preferably 10 to 20 %, more preferably 13 to 18; and/or |
| X₂O: | 0 to 30 %, preferably 0 to 5 %, more preferably 0 to 3 %, wherein X is selected from Na, K, Li, preferably X is Na and/or K; and/or |
| YO: | 0 to 50 %, preferably 0.1 to 40 %, more preferably 10 to 35, wherein Y is selected from Ca, Mg, Ba, preferably Y is Ca and/or Mg. |

More preferably, the composition of the glass consists of, in mass-%:

| | |
|---|---|
| SiO₂: | 20 to 98 %, preferably 40 to 75 %, more preferably 50 to 65 %; |
| B₂O₃: | 0 to 30 %, preferably 1 to 15 %, more preferably 3 to 9 %; |
| Al₂O₃: | 0 to 30 %, preferably 10 to 20 %, more preferably 13 to 18; |
| X₂O: | 0 to 30 %, preferably 0 to 5 %, more preferably 0 to 3 %, wherein X is selected from Na, K, Li, preferably X is Na and/or K; |
| YO: | 0 to 50 %, preferably 0.1 to 40 %, more preferably 10 to 35, wherein Y is selected from Ca, Mg, Ba, preferably Y is Ca and/or Mg; and preferably unavoidable impurities. |

The shape of the glass element is not particularly limited. The shape might be a tube, rod, plate and/or container. Preferably, the glass element is a container, more preferably a pharmaceutical container, more preferably a vial, syringe, ampoule or cartridge, more preferably a vial. Even if developed for pharmaceutical packaging, the coated glass element might be used due to its improved properties also in cars, planes, technical tubes and many other technical fields.

If the glass element is a container, the volume of the container is not particularly limited. Preferably, the brimful volume of the container is 0.1 ml to 1000 ml, preferably, 0.5 ml to 500 ml, more preferably 1 ml to 250 ml, more preferably 2 ml to 30 ml, more preferably 2 ml to 15 ml, more preferably about 1 ml, 2 ml, 3 ml, 4, ml, 5 ml, 6 ml, 7 ml, 8 ml, 9 ml, 10 ml, 11 ml, 12 ml, 13 ml, 14 ml or 15 ml; more preferably 5 to 15 ml.

The position of the at least part of the glass surface is not particularly limited. Preferably, the glass element, preferably wherein the glass element is a tube or container, more preferably a container, comprises an inner surface, wherein the inner surface comprises, preferably is, the at least part of the glass surface. Thus, if a pharmaceutical composition is present in the container, the inner surface of the glass element is efficiently protected.

In another preferred embodiment, the glass element, preferably wherein the glass element is a tube or container, more preferably a container, comprises an outer surface and wherein the outer surface comprises, preferably is, the at least part of the glass surface.

In a preferred embodiment, the glass element is a vial or a cartridge comprising a cylindrical portion, a neck and a crown, wherein at least the inner surface of the cylindrical portion is coated by the coating. Thus, if a pharmaceutical composition is present in the container, the inner surface of the glass element is efficiently protected.

In a preferred embodiment the at least part of the glass surface of the container comprises at least part of the inner surface of the container, preferably the at least part of the glass surface of the container is the surface which is in contact with a liquid when the container evenly stands on the ground and is filled with a liquid having a volume of 10 % or more, preferably 30 % or more, more preferably 90 % or more with respect to the brimful volume [vol./vol.] of the container.

In a preferred embodiment, the glass element is a vial or a cartridge comprising a cylindrical portion, a neck and a crown, wherein the crown, preferably and the neck, are uncoated and/or the glass element is a syringe comprising a flange, a cylindrical portion and a tip, preferably and a needle, wherein the needle, preferably and the flange, more preferably and the tip, are uncoated. Thus, the storage stability of a pharmaceutical composition, if present, is improved.

### Definitions

If not stated otherwise, throughout the description and the claims the following definitions apply:
Herein Tg (glass transition temperature) is measured by differential scanning calorimetry (DSC).

Ultrapure water herein is water of purity 1 analogue DIN ISO 3696 with ≤ 0,1 µS/cm at 25°C.

### Leaching measurement

The leaching of Si of the treated container can be measured be for instance by the following test Q. The effect can be determined by a leaching test on the internal surface. The test can be applied to both an untreated and treated glass container.

The test Q is done with a standard 2R vial, optionally also with a different size like an 5R. The following steps are performed for the inner surface
1. Washing vial with water.
2. Drying vial for 4 hours at 121 C in autoclave vacuum (e.g. Systec, model DX-150 (PM-CA-0001-01)), vial positioned bottom up.
3. Fill with ultrapure water to 0.33 brim full level.
4. Autoclave filled vial for 2 hours at 121 C, 1 bar above ambient pressure.
5. Analyzing the water content (mg/l) of [Si] ions, by FAAS analysis, e.g. using Varian SpectrAA 280 FS (PE 3-004), to obtain the value [mg/l] for the leaching of [Si] ions.

With the leaching test Q the Si leaching of the treated glass container is lower than 6 mg/l, in particular lower than 4 mg/l and mostly lower than 2 mg/l. This was the result in testing vials treating according the examples named below. The leaching test Q performed on an untreated glass container shows an Si leaching of higher than 6 mg/l.

### Example 1

If not stated otherwise, example 1 was prepared according to EP 0 821 079 A1, EP 0 811 367 A2, WO 03 015 122 A1 and EP 2 106 461 A1:
Two 5R vials (EVERICTM pure from SCHOTT AG) were provided. As first treatment, a washing treatment was performed in which the vials were washed with ultrapure water with ≤ 10 µS/cm at 25°C for two minutes at room temperature, for 6 minutes at 40° C, and subsequently for 20 minutes at room temperature in a laboratory dishwasher (LS-2000 from HAMO AG). Afterwards, the vials were dried for 20 minutes at 290 °C.

Subsequently, the two vials were treated and coated simultaneously using an apparatus according to WO 03 015 122 A1. For all plasma treatments, a microwave irradiation was used having a frequency of 2.45 GHz. The reaction chambers were the insides of the vials. Ambient conditions prevailed outside of the vials.

First, the inside of the vials were evacuated until a value of 0.05 mbar was reached. Afterwards, oxygen was filled in the vials (flow rate for both vials: 50 sccm) until a pressure of 5 mbar was reached and then a plasma treatment started. The plasma was excited with an input power of 6700 W (for both vials) in a pulsed mode with a pulse duration of 0.5 ms, and pulse pause of 1.8 ms. The plasma treatment was performed for 14 seconds until the temperature of the vials was 280 °C, measured with a pyrometer at the middle of the cylindrical part of the vials.

### Example 2

If not stated otherwise, example 2 was prepared according to EP 0 821 079 A1, EP 0 811 367 A2, WO 03 015 122 A1 and EP 2 106 461 A1:
Two 5R vials (EVERICTM pure from SCHOTT AG) were provided. As first treatment, a washing treatment was performed in which the vials were washed with ultrapure water with ≤ 10 µS/cm at 25°C for two minutes at room temperature, for 6 minutes at 40° C, and subsequently for 20 minutes at room temperature in a laboratory dishwasher (LS-2000 from HAMO AG). Afterwards, the vials were dried for 20 minutes at 290 °C.

Subsequently, the two vials were treated and coated simultaneously using an apparatus according to WO 03 015 122 A1. For all plasma treatments, a microwave irradiation was used having a frequency of 2.45 GHz. The reaction chambers were the insides of the vials. Ambient conditions prevailed outside of the vials.

First, the inside of the vials were evacuated until a value of 0.05 mbar was reached. Afterwards, oxygen was filled in the vials (flow rate for both vials: 50 sccm) until a pressure of 1.2 mbar was reached and then a plasma treatment started. The plasma was excited with an input power of 5500 W in a pulsed mode with a pulse duration of 0.5 ms, and pulse pause of 1.8 ms. The plasma treatment was performed for 27 seconds until the temperature of the vials was 280 °C, measured with a pyrometer at the middle of the cylindrical part of the vials.

Vials treated with a washing step and a plasma treatment can be called uncoated as no coating has been applied.

### Description of the figures and particularly preferred embodiments

There are several ways how to design and further develop the teaching of the present invention in an advantageous way. To this end, it is to be referred to the patent claims subordinate to the independent patent claims on the one hand and to the following explanation of preferred examples of embodiments of the invention, illustrated by the figures; and the attached items on the other hand. In connection with the explanation of the preferred embodiments of the invention by the aid of the figures, generally preferred embodiments and further developments of the teaching will be explained:
- Fig. 1:: Schematic side view of an embodiment of the invention;
- Fig. 2:: Schematic side view of an embodiment of the invention;
- Fig. 3:: Block diagrams of a method according to an embodiment of the invention;

In the following description of embodiments, the same reference numeral designate similar components.

### Reference list

- 1: glass surface
- 2: coating
- 3: treated glass surface
- 1001: treatment
- 1002: coating process
- 1003: post-processing

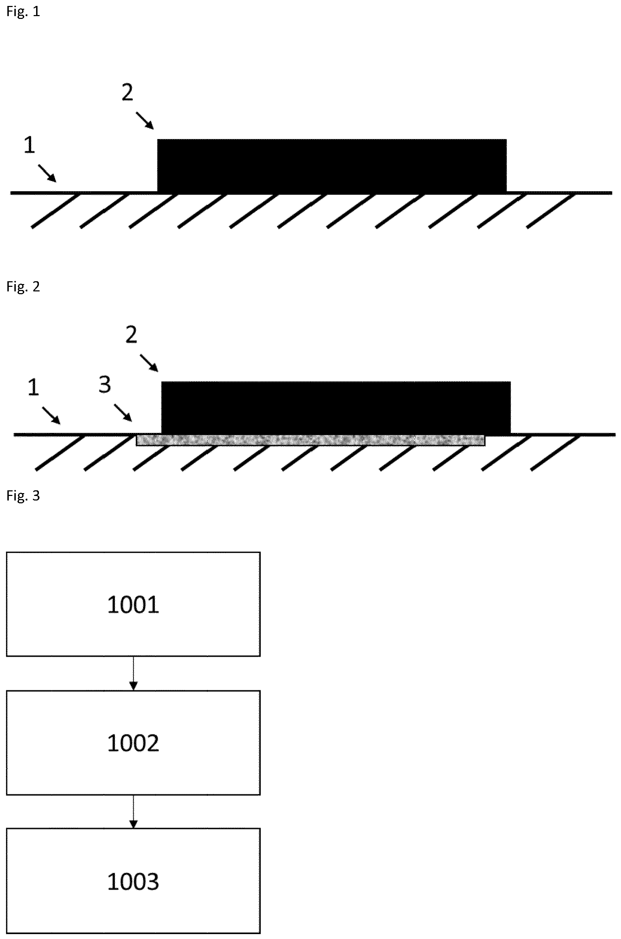

Figures 1 and 2 depict schematic side views of an embodiment of the invention. The treated surface 3 has been covered in an optional coating 2. In Figure 1, the glass surface 1 is partially coated by a coating 2. The depicted coating is a single layer coating. Consequently, the coating is in direct contact with the glass surface 1 and is the outermost layer. In Figure 2, the partially pretreated glass surface 3 is partially coated by the coating 2. The depicted coating is a single layer coating. Consequently, the coating is in direct contact with the glass surface 1 and is the outermost layer.

Figure 3 shows a block diagrams of a method according to an embodiment of the invention. After the treatment 1001, the coating process 1002 is performed. Afterwards a post-processing 1003 may be performed.

### Items

1. Method, preferably according to any one of the preceding items, comprising the step:
   - performing a treating process on (the) at least part of the glass surface of a/the glass element, wherein the treating process is one or more, preferably first the washing treatment and then the plasma treatment, of the following:
      i) a washing treatment; and/or
      ii) a plasma treatment.
2. Method according to any one of the preceding items,
   wherein the washing treatment is spraying water to the at least part of the glass surface, wherein one or more, preferably all, of the following parameters are fulfilled:
   i) the time of spraying is 1 s to 5 h, preferably 5 s to 60 min, more preferably 1 min to 40 min, more preferably 10 min to 40 min; and/or
   ii) the water conductivity is 0.1 µs/cm to 400 µs/cm, preferably 0.5 µs/cm to 10 µs/cm, more preferably 1 µs/cm to 5 µs/cm, more preferably about 2 µs/cm; and/or
   iii) the temperature of the water is 10 °C or more, preferably 15 °C to 100 °C, more preferably 20 °C to 80 °C, more preferably 25 °C to 40 °C.
3. Method according to any one of the preceding items,
   wherein the plasma treatment is a plasma-enhanced chemical vapor treatment (PECVT) process, plasma impulse chemical vapor treatment (PICVT) process or plasma assisted chemical vapor treatment (PACVT) process, comprising the steps:
   a) surrounding the at least part of the glass surface of the glass element with a pre-cursor P2; and
   b) irradiating the precursor P2 to generate a plasma;
   wherein at least one, preferably all, of the following parameters is/are fulfilled:
   i) wherein the process temperature PT2 is room temperature to Tg of the glass of the glass element, preferably room temperature to 450 °C, more preferably room temperature to 400 °C, more preferably room temperature to 320 °C, more preferably room temperature to 280 °C; and/or
   ii) wherein the pulse duration PD2 of the plasma is 50 ms or less, preferably 40 ms or less, preferably 30 ms or less, more preferably 20 ms or less, more preferably 15 ms or less, more preferably 8 ms or less, more preferably 6 ms or less, more preferably 1 ms or less, more preferably 0.5 ms; and/or
   iii) wherein the pulse duration PD2 of the plasma is 0.1 ms or more, preferably 0.2 ms or more, more preferably 0.3 ms or more, more preferably 0.5 ms or more; and/or
   iv) wherein the irradiation is carried out by a microwave generator, preferably wherein the ray has a frequency of 300 MHz to 300 GHz, more preferably 600 MHz to 100 GHz, more preferably 800 MHz to 10 GHz, more preferably 900 MHz to 3 GHz, more preferably 2.45 GHz; and/or
   v) wherein the input power IP2, preferably the input power IP2 of the microwave generator, is 1000 W to 10000 W, preferably 2500 W to 8000 W, more preferably 4000 W to 8000 W, more preferably 5000 W to 7000 W, more preferably 5000 W to 6500 W, more preferably 5250 W to 5750 W; and/or
   vi) the precursor P2 comprises argon, oxygen and/or nitrogen, preferably oxygen, more preferably precursor P2 is air; and/or
   vii) wherein the precursor P2 comprises, preferably consists of, the elements N, e.g.N2, and/or O, e.g. O2; preferably N2 and O2, more preferably O2; and/or
   viii) the pulse pause PP2 between two pulses is 1 µs or more, preferably 10 µs or more, more preferably 1 µs to 5 s, more preferably 0.1 ms to 10 ms, more preferably 0.5 ms to 2.0 ms, more preferably 1.5 ms to 2.0 ms, more preferably 1.8 ms; and/or
   ix) the total time TT2 of irradiation is 0.1 s or more, preferably 1 s or more, more preferably 1 s to 5 min, more preferably 5 s to 15 s; and/or
   x) the ratio [ms/ms] of all pulse durations PD2 [ms] to all pulse pauses PP2 [ms] is 0.05 or more, preferably 0.1 or more, more preferably 0.15 to 5, more preferably 0.2 to 0.5; and/or
   xi) wherein the process pressure PR2 is 0.01 mbar to 500 mbar, preferably 0.1 mbar to 100 mbar, more preferably 0.5 mbar to 10 mbar, more preferably 0.8 mbar to 6.0 mbar, more preferably 1.0 mbar to 4.0 mbar; and/or
   xii) wherein the process temperature PT2 is increasing, preferably steadily increasing, during the plasma treatment; and/or
   xiii) wherein the process temperature PT2 is at least partially, preferably at the time when the plasma treatment process ends, 220 °C or more, preferably 240 °C or more, more preferably 250 °C or more, more preferably 255 °C or more, more preferably 270 °C or more, more preferably 280 °C or more; and/or
   xiv) wherein the flow rate of the precursor P2 is 0.1 to 500 sccm, preferably 5 to 100 sccm, more preferably 8 to 50 sccm, more preferably 20 to 30 sccm.
4. Use of a pretreated glass element according to any one of the preceding items in a method comprising a coating process, preferably wherein the coating process comprises a CVD process, more preferably a PECVD, PICVD or PACVD process, more preferably a PICVD process.
5. Method, use, glass element, coated glass element and/or filled coated glass element according to any one of the preceding items, wherein the glass is a borosilicate glass, an aluminosilicate glass, a lithium-aluminosilicate (LAS) glass, preferably a borosilicate glass.
6. Method, use, glass element, coated glass element and/or filled coated glass element according to any one of the preceding items, wherein the composition of the glass comprises, in mass-%:
   SiO₂: 30 to 98 %, preferably 50 to 90 %, more preferably 70.0 to 74.0 %; and/or
   B2O3: 0 to 30 %, preferably 3 to 20 %, more preferably 7.0 to 16.0 %; and/or
   Al2O3: 0 to 30 %, preferably 1 to 15 %, more preferably 3.0 to 6.5 %; and/or
   X2O: 0 to 30 %, preferably 1 to 15 %, more preferably 2.0 to 7.2 %, wherein X is selected from Na, K, Li, preferably X is Na and/or K; and/or
   YO: 0 to 30 %, preferably 0.1 to 5 %, more preferably 0.5 to 1.0 %, wherein Y is selected from Ca, Mg, Ba, preferably Y is Ca and/or Mg.
7. Method, use, glass element, coated glass element and/or filled coated glass element according to any one of the preceding items, wherein the composition of the glass con-sists of, in mass-%:
   SiO₂: 30 to 98 %, preferably 50 to 90 %, more preferably 70.0 to 74.0 %;
   B2O3: 0 to 30 %, preferably 3 to 20 %, more preferably 7.0 to 16.0 %;
   Al2O3: 0 to 30 %, preferably 1 to 15 %, more preferably 3.0 to 6.5 %;
   X2O: 0 to 30 %, preferably 1 to 15 %, more preferably 2.0 to 7.2 %, wherein X is selected from Na, K, Li, preferably X is Na and/or K;
   YO: 0 to 30 %, preferably 0.1 to 5 %, more preferably 0.5 to 1.0 %, wherein Y is selected from Ca, Mg, Ba, preferably Y is Ca and/or Mg; and
   preferably unavoidable impurities.
8. Method, use, glass element, coated glass element and/or filled coated glass element according to any one of the preceding items, wherein the composition of the glass comprises, in mass-%:
   SiO2: 20 to 98 %, preferably 40 to 75 %, more preferably 50 to 65 %; and/or
   B2O3: 0 to 30 %, preferably 1 to 15 %, more preferably 3 to 9 %; and/or
   Al2O3: 0 to 30 %, preferably 10 to 20 %, more preferably 13 to 18; and/or
   X2O: 0 to 30 %, preferably 0 to 5 %, more preferably 0 to 3 %, wherein X is selected from Na, K, Li, preferably X is Na and/or K; and/or
   YO: 0 to 50 %, preferably 0.1 to 40 %, more preferably 10 to 35, wherein Y is selected from Ca, Mg, Ba, preferably Y is Ca and/or Mg.
9. Method, use, glass element, coated glass element and/or filled coated glass element according to any one of the preceding items, wherein the composition of the glass consists of, in mass-%:
   SiO2: 20 to 98 %, preferably 40 to 75 %, more preferably 50 to 65 %;
   B2O3: 0 to 30 %, preferably 1 to 15 %, more preferably 3 to 9 %;
   Al2O3: 0 to 30 %, preferably 10 to 20 %, more preferably 13 to 18;
   X2O: 0 to 30 %, preferably 0 to 5 %, more preferably 0 to 3 %, wherein X is selected from Na, K, Li, preferably X is Na and/or K;
   YO: 0 to 50 %, preferably 0.1 to 40 %, more preferably 10 to 35, wherein Y is selected from Ca, Mg, Ba, preferably Y is Ca and/or Mg; and
   preferably unavoidable impurities.
10. Method, use, glass element, coated glass element and/or filled coated glass element according to any one of the preceding items,
   wherein the glass element is a container, more preferably a pharmaceutical container, more preferably a vial, syringe, ampoule or cartridge, more preferably a vial.
11. Method, use, glass element, coated glass element and/or filled coated glass element according to any one of the preceding items,
   wherein the brimful volume of the container is 0.1 ml to 1000 ml, preferably, 0.5 ml to 500 ml, more preferably 1 ml to 250 ml, more preferably 2 ml to 30 ml, more preferably 2 ml to 15 ml, more preferably about 1 ml, 2 ml, 3 ml, 4, ml, 5 ml, 6 ml, 7 ml, 8 ml, 9 ml, 10 ml, 11 ml, 12 ml, 13 ml, 14 ml or 15 ml; more preferably 5 to 15 ml.
12. Method, use, glass element, coated glass element and/or filled coated glass element according to any one of the preceding items,
   preferably wherein the glass element is a tube or container, more preferably a container,
   wherein the glass element comprises an inner surface, wherein the inner surface com-prises, preferably is, the at least part of the glass surface.
13. Method, use, glass element, coated glass element and/or filled coated glass element according to any one of the preceding items,
   preferably wherein the glass element is a tube or container, more preferably a container,
   wherein the glass element comprises an outer surface and wherein the outer surface comprises, preferably is, the at least part of the glass surface.
14. Method, use, glass element, coated glass element and/or filled coated glass element according to any one of the preceding items,
   wherein the glass element is a vial or a cartridge comprising a cylindrical portion, a neck and a crown, wherein at least the inner surface of the cylindrical portion is coated by the coating.
15. Method, use, glass element, coated glass element and/or filled coated glass element according to any one of the preceding items,
   wherein the at least part of the glass surface of the container comprises at least part of the inner surface of the container, preferably the at least part of the glass surface of the container is the surface which is in contact with a liquid when the container evenly stands on the ground and is filled with a liquid having a volume of 10 % or more, preferably 30 % or more, more preferably 90 % or more with respect to the brimful volume [vol./vol.] of the container.
16. Method, use, glass element, coated glass element and/or filled coated glass element according to any one of the preceding items,
   wherein the glass element is a vial or a cartridge comprising a cylindrical portion, a neck and a crown, wherein the crown, preferably and the neck, are uncoated and/or
   wherein the glass element is a syringe comprising a flange, a cylindrical portion and a tip, preferably and a needle, wherein the needle, preferably and the flange, more preferably and the tip, are uncoated.

In summary, embodiments and preferred embodiments are the following. The scope of protection is defined by the claims. The combination of two or more embodiments, e.g. 3, 4 or 8 embodiments is further preferred. Definitions and general statements herein preferably also apply for the following embodiments and preferred embodiments.

In a further preferred embodiment, the inner surface of the container, preferably the entire inner surface of the container, is coated. Thus, a pharmaceutical composition is further protected. In a further preferred embodiment, the outer surface of the container is uncoated. In a further preferred embodiment, the inner surface of the container, preferably the entire inner surface of the container, is coated and the outer surface of the container is uncoated. Thus, a pharmaceutical composition is further protected. More preferably, the coating is obtainable as described in the European patent application EP 21164 784.

## Claims

1. Method for treating a glass container, comprising the steps of:
- Providing a glass container
a washing treatment of at least part of an inner surface of the glass container
a plasma treatment of at least part of the inner surface of the glass container;

2. Method according to claim 1,
wherein the washing treatment is spraying water to the at least part of the glass surface,
wherein one or more, preferably all, of the following parameters are fulfilled:
i) the time of spraying is 1 s to 4 h, preferably 9 s to 50 min, more preferably 2 min to 40 min, more preferably 11 min to 39 min; and/or
ii) the water conductivity is 0.1 µs/cm to 400 µs/cm, preferably 0.5 µs/cm to 10 µs/cm, more preferably 1 µs/cm to 5 µs/cm, more preferably about 2 µs/cm; and/or
iii) the temperature of the water is 10 °C or more, preferably 15 °C to 100 °C, more preferably 20 °C to 80 °C, more preferably 25 °C to 40 °C.

3. Method according to claim 2,
wherein the plasma treatment is a plasma-enhanced chemical vapor treatment (PECVT) process, plasma impulse chemical vapor treatment (PICVT) process or plasma assisted chemical vapor treatment (PACVT) process, comprising the steps:
a) surrounding the at least part of the (internal) glass surface of the glass element with a precursor P2; and
b) irradiating the precursor P2 to generate a plasma;
wherein at least one, preferably all, of the following parameters is/are fulfilled:
i) wherein the process temperature PT2 is room temperature to Tg of the glass of the glass element, preferably room temperature to 450 °C, more preferably room temperature to 400 °C, more preferably room temperature to 320 °C, more preferably room temperature to 280 °C; and/or
ii) wherein the pulse duration PD2 of the plasma is 50 ms or less, preferably 40 ms or less, preferably 30 ms or less, more preferably 20 ms or less, more preferably 15 ms or less, more preferably 8 ms or less, more preferably 6 ms or less, more preferably 1 ms or less, more preferably 0.5 ms; and/or
iii) wherein the pulse duration PD2 of the plasma is 0.1 ms or more, preferably 0.2 ms or more, more preferably 0.3 ms or more, more preferably 0.5 ms or more; and/or
iv) wherein the irradiation is carried out by a microwave generator, preferably wherein the ray has a frequency of 300 MHz to 300 GHz, more preferably 600 MHz to 100 GHz, more preferably 800 MHz to 10 GHz, more preferably 900 MHz to 3 GHz, more preferably 2.45 GHz; and/or
v) wherein the input power IP2, preferably the input power IP2 of the microwave generator, is 1000 W to 10000 W, preferably 2500 W to 8000 W, more preferably 4000 W to 8000 W, more preferably 5000 W to 7000 W, more preferably 5000 W to 6500 W, more preferably 5250 W to 5750 W; and/or
vi) the precursor P2 comprises argon, oxygen and/or nitrogen, preferably oxygen, more preferably precursor P2 is air, and does not contain ammonia; and/or
vii) wherein the precursor P2 comprises, preferably consists of, the elements N, e.g.N₂, and/or O, e.g. O₂; preferably N₂ and O₂, more preferably O₂, and does not contain ammonia and/or
viii) the pulse pause PP2 between two pulses is 1 µs or more, preferably 10 µs or more, more preferably 1 µs to 5 s, more preferably 0.1 ms to 10 ms, more preferably 0.5 ms to 2.0 ms, more preferably 1.5 ms to 2.0 ms, more preferably 1.8 ms; and/or
ix) the total time TT2 of irradiation is 0.1 s or more, preferably 1 s or more, more preferably 1 s to 5 min, more preferably 5 s to 15 s; and/or
x) the ratio [ms/ms] of all pulse durations PD2 [ms] to all pulse pauses PP2 [ms] is 0.05 or more, preferably 0.1 or more, more preferably 0.15 to 5, more preferably 0.2 to 0.5; and/or
xi) wherein the process pressure PR2 is 0.01 mbar to 500 mbar, preferably 0.1 mbar to 100 mbar, more preferably 0.5 mbar to 10 mbar, more preferably 0.8 mbar to 6.0 mbar, more preferably 1.0 mbar to 4.0 mbar; and/or
xii) wherein the process temperature PT2 is increasing, preferably steadily increasing, during the plasma treatment; and/or
xiii) wherein the process temperature PT2 is at least partially, preferably at the time when the plasma treatment process ends, 220 °C or more, preferably 240 °C or more, more preferably 250 °C or more, more preferably 255 °C or more, more preferably 270 °C or more, more preferably 280 °C or more; and/or
xiv) wherein the flow rate of the precursor P2 is 0.1 to 500 sccm, preferably 5 to 100 sccm, more preferably 8 to 50 sccm, more preferably 20 to 30 sccm.

4. Method according to any of the preceding claims, wherein the provided glass container is a vial, syringe, cartridge or ampule.

5. Method according to claim 4, wherein the glass container is a vial with a size of 1R to 9R or 11R to 100R.

6. Method according to any of the preceding claims, further comprising providing additional coatings on the at least part of the inner surface that has been treated with the plasma treatment.

7. Pharmaceutical glass container treated according to any of the preceding claims wherein the glass container comprises an inner surface and an outer surface, wherein the leaching of [Si] ions of the inner surface is 6 mg/l or less.

8. Pharmaceutical glass container according to claim 7 wherein the leaching is 6.0 mg/l or less, preferably 5.0 mg/l or less, more preferably 2.0 mg/l or less.

9. Pharmaceutical glass container according to claim 7 or 8 wherein the leaching is 0.01 mg/l or more, preferably 0.1 mg/l or more.

10. Pharmaceutical glass container according to any of claim 7 to 9, wherein the inner surface of the container is uncoated.

11. Pharmaceutical glass container according to any of claim 7 to 10, wherein the leaching is obtainable by the method described in the description.

12. Pharmaceutical glass container according to any of claim 7 to 11, wherein the glass container made of glass.

13. Pharmaceutical glass container according to any of claim 7 to 11, wherein the wherein the container is a vial, syringe, cartridge or ampule.
